# EUROPÄISCHE PATENTSCHRIFT

(11) **EP 2 635 998 B1**
(45) Veröffentlichungstag und Bekanntmachung des Hinweises auf die Patenterteilung: **05.10.2016**
(21) Anmeldenummer: 11781774.2
(22) Anmeldetag: 03.11.2011
(51) Int. Cl.: G06K 17/00, G01S 1/70, G07C 9/00, G08B 25/10

(54) **MOBILES GERÄT UND INFRASTRUKTURSYSTEM**
MOBILE DEVICE AND INFRASTRUCTURE SYSTEM
APPAREIL MOBILE ET SYSTÈME D'INFRASTRUCTURE

(30) Priorität: 04.11.2010 DE 102010043394
(43) Veröffentlichungstag der Anmeldung: 11.09.2013
(73) Patentinhaber: Fraunhofer Portugal Research, 4169-007 Porto (PT)
(72) Erfinder: ELIAS, Dirk, P-4450-171 Matosinhos (PT)
(74) Vertreter: Schenk, Markus
(86) Internationale Anmeldenummer: PCT/EP2011/069321
(87) Internationale Veröffentlichungsnummer: WO 2012/059542

(56) Entgegenhaltungen:
- FR-A1- 2 932 302
- US-A- 4 347 501
- US-A- 5 917 425

## Beschreibung

Die vorliegende Erfindung bezieht sich auf ein Infrastruktursystem für ein mobiles Gerät und auf das mobile Gerät selbst, wie z.B. zum Zwecke der Lokalisierung und Identifizierung mobiler Geräte.

Die Kenntnis des Aufenthaltsorts eines Gegenstands oder einer Person ermöglicht die Nutzung einer Vielzahl von ortsbezogenen Diensten und Anwendungen. Während außerhalb geschlossener Räume satellitengestützte Systeme zur Lokalisierung genutzt werden können, sind innerhalb geschlossener Räume andere Systeme und Techniken notwendig. US 4 347 501 offenbart ein System zur Identifizierung gemäss dem Stand der Technik.

Darüber hinaus ist die Übertragung eines individuellen Identifikationsmerkmals, wie z.B. eines kryptographischen Schlüssels, über eine sehr kurze Distanz eine Möglichkeit zum Aufbau einer abhörsicheren und verschlüsselten Kommunikation über das Internet.

Es bestehen verschiedene Möglichkeiten, obige Lokalisierungs- und Identifikationsmerkmalsübertragungsaufgaben zu erfüllen. Dabei kann zwischen möglichen Systemen mit großer Reichweite, die typischerweise mehrere Räume abdecken können, und Systemen mit geringerer Reichweite, die innerhalb von einzelnen Räumen agieren, unterschieden werden. Ein HF-System mit Zeitmessung kann beispielsweise zur Lokalisierung mobiler Geräte eingesetzt werden. Die Lokalisierung wird über den zeitlichen Versatz, d.h. die Laufzeit, von Funksignalen in einem zeitlich synchronisierten Umfeld mit mehreren Sendern oder Empfängern durchgeführt. Die Lokalisierung ist dementsprechend genau, allerdings auch sehr aufwendig, und der Aufwand erhöht sich enorm im Inneren von Gebäuden.

HF-Systeme können allerdings auch Feldstärkemessungen ausnutzen, um eine Lokalisierung eines mobilen Gerätes über die gemessene Feldstärke an Sendern mit bekanntem Installationsort durchzuführen. Die Lokalisierung kann am zu ortenden System, d.h. dem Empfänger, vorgenommen werden. Alternativ kann die Messung der Sendesignale eines zu ortenden Systems durch mehrere Empfänger mit bekanntem Installationsort verwendet werden. Wenngleich der Implementierungsaufwand ein wenig verringert ist gegenüber der zuvor erwähnten Möglichkeit der Zeitmessung zur Lokalisierung, gelten dennoch im Wesentlichen die gleichen Nachteile, nämlich der hohe Aufwand und die Probleme bei der Indoor-Lokalisierung.

Zur Lokalisierung existiert natürlich noch die Möglichkeit, eine Magnetfeld-Vektormessung durchzuführen, um die Lokalisierung über die Messung des Feldvektors mehrerer künstlicher magnetischer Felder vorzunehmen. Der Aufwand zur Erzeugung der künstlich magnetischen Felder ist allerdings groß.

Systeme mit geringerer Reichweite können beispielsweise auf der Bildverarbeitung basieren. Ein Raum wird anhand allgemeiner Merkmale oder mittels speziell angebrachter Markierungen, wie z.B. Barcodes, erkannt. Diese Systeme sind allerdings fehleranfällig oder setzen einen disziplinierten Benutzer voraus.

HF-Baken bzw. aktive oder passive RFID-Systeme können für obige Lokalisierungs- und Identifizierungsaufgaben verwendet werden. Ein solches System kommuniziert mit schwachen elektromagnetischen Feldern mit dem zu lokalisierenden oder zu identifizierenden System. Der Implementierungsaufwand ist hier aufgrund der etwas geringeren Lokalisierungsgenauigkeit etwas geringer, aber dennoch müssen proprietäre Komponenten eingesetzt werden, um das System zu implementieren.

Es existiert auch die Möglichkeit, Infrarotsysteme zu verwenden, die mittels einer Infrarotkommunikation den Aufenthaltsort eines zu lokalisierenden Gegenstandes erkennen. Ein Sender kann beispielsweise an dem zu lokalisierenden Gegenstand vorgesehen sein oder aber ein Empfänger.

Beispiele obiger Lösungen existieren bereits auf dem Markt. Vergleiche beispielsweise Ekahau, Aeroscout, NFC, Ivistar und Elpas. Ferner sind Implementierungen in DE10028328, DE4441907 und US4958645 beschrieben.

Es ist möglich, obige Systeme mit großer Reichweite zur Steigerung der Genauigkeit mit letztgenannten Systemen mit kurzer Reichweite zu kombinieren.

Es wäre wünschenswert, für Lokalisierungs- und Identifizierungsaufgaben ein Konzept zu besitzen, das wenig Investitionsaufwand bzw. Umrüstaufwand erfordert und dabei insbesondere auch den Anforderungen gewachsen ist, wie sie sich in Gebäudeinneren stellen. WLAN-Ortungskonzepte benötigen beispielsweise zwar einen geringen Implementierungsaufwand, da die Infrastruktur meist schon vorhanden ist, aber ihr Einsatz im Gebäudeinneren stellt immer noch ein großes Problem dar, was die Fehleranfälligkeit gegenüber beispielsweise Fehllokalisierungen erhöht. RFID-Konzepte erfordern umgekehrt einen hohen Investitionsaufwand, da die Infrastruktur zumeist nicht vorhanden oder, wenn vorhanden, nicht für jedermann verfügbar ist.

Eine Aufgabe der vorliegenden Erfindung besteht deshalb darin, ein Infrastruktursystem und ein mobiles Gerät zu schaffen, so dass Aufgaben der Lokalisierung und Identifikation mit einem besseren Verhältnis zwischen Aufwand, wie z.B. Implementierungs- und/oder Umrüstaufwand, auf der einen Seite und Indoor-Einsatzfähigkeit auf der anderen Seite erfüllbar sind.

Diese Aufgabe wird durch ein Infrastruktursystem gemäß Anspruch 1 und ein mobiles Gerät gemäß Anspruch 8 oder 13 gelöst.

Eine der vorliegenden Erfindung zugrunde liegende Beobachtung besteht darin, dass in heutigen mobilen Geräten Magnetfeldsensoren meist bereits vorhanden sind, wie z.B. in Form von Hall-Sensoren oder dergleichen, und zwar zusätzlich zu einer meist ohnehin vorhandenen Fähigkeit zur Kommunikation bzw. zum Senden von Informationen über eine Hochfrequente-Elektromagnetische-Welle-Schnittstelle, wie z.B. WLAN, GSM oder dergleichen. Beispiele für solche mobilen Geräte sind Handys oder tragbare Multimediaabspielgeräte oder dergleichen. Eine der vorliegenden Erfindung zugrunde liegende Idee besteht nun darin, dass die Magnetfeldsensoren dieser mobilen Geräte dazu verwendet werden können, den mobilen Geräten an einem lokal äußerst begrenzten Bereich Informationen zukommen zu lassen, indem nämlich durch einen Informationssignalgenerator lokal an dieser Stelle ein Magnetfeld erzeugt wird, das mit diesen Informationen moduliert ist. Aufgrund seiner weiteren Hochfrequente-Elektromagnetische-Welle-Schnittstelle ist das mobile Gerät in der Lage, eine Meldung, die von dieser Information abhängt, zu einer Zentrale zu senden, wie z.B. einer Verarbeitungseinheit des Infrastruktursystems, die daraufhin beispielsweise überprüfen kann, ob die Meldung zu der Information passt, um beispielsweise zu bestimmen, dass sich das mobile Gerät in der Zelle bzw. dem Magnetfeld des jeweiligen Informationssignalgenerators befindet. Das Infrastruktursystem kann verschiedene Maßnahmen ergreifen, die von dieser Überprüfung abhängen, wie z.B. die Ortung, eine Informationsübertragung an das mobile Gerät, das Auslösen eines Alarmsignals, der gewähren eines Zutritts usw. Alternativ ist es möglich, dass das mobile Gerät selbst bereits die lokal exakte Definition der Magnetfeldzelle des Informationssignalgenerators und die Information der Magnetfeldmodulation ausnutzend seine Position bestimmt, in welchem Fall das mobile Gerät selbst nicht mit einer Hochfrequente-Elektromagnetische-Welle-Schnittstelle ausgerüstet sein muss. Der Örtliche Begrenztheit der Verfügbarkeit der Magnetfeldmodulation macht es ferner möglich, Informationen gezielt und ohne zu große Abhörgefahr durch unbefugte Dritte, an ein sich in der jeweiligen Zelle befindliches Gerät zu übertragen. Dies kann auch in einem entsprechenden In-House-Infrastruktursystem ausgenutzt werden.

Bevorzugte Ausgestaltungen der vorliegenden Anmeldung sind Gegenstand der abhängigen Patentansprüche.

Bevorzugte Ausführungsbeispiele der vorliegenden Anmeldung werden nachfolgend Bezug nehmend auf die beiliegenden Zeichnungen näher erläutert, unter welchen
- Fig. 1: ein Blockschaltbild eines Infrastruktursystems gemäß einem Ausführungsbeispiel der vorliegenden Anmeldung zeigt;
- Fig. 2: eine Schnittansicht von oben eines Raums eines Gebäudes mit eingezeichneten möglichen Antennenspulenverläufen für einen Informationssignalgenerator gemäß einem Ausführungsbeispiel zeigt;
- Fig. 3: ein Blockschaltbild eines mobilen Geräts gemäß einem Ausführungsbeispiel zeigt;
- Fig. 4: ein Blockschaltbild eines mobilen Geräts gemäß einem weiteren Ausführungsbeispiel zeigt;
- Fig. 5: ein Blockschaltbild eines Informationssignalgenerators gemäß einem Ausführungsbeispiel zeigt;
- Fig. 6: ein Blockschaltbild eines mobilen Geräts gemäß einem weiteren Ausführungsbeispiel zeigt; und
- Fig. 7: ein Blockschaltbild eines mobilen Geräts gemäß einem weiteren Ausführungsbeispiel zeigt.

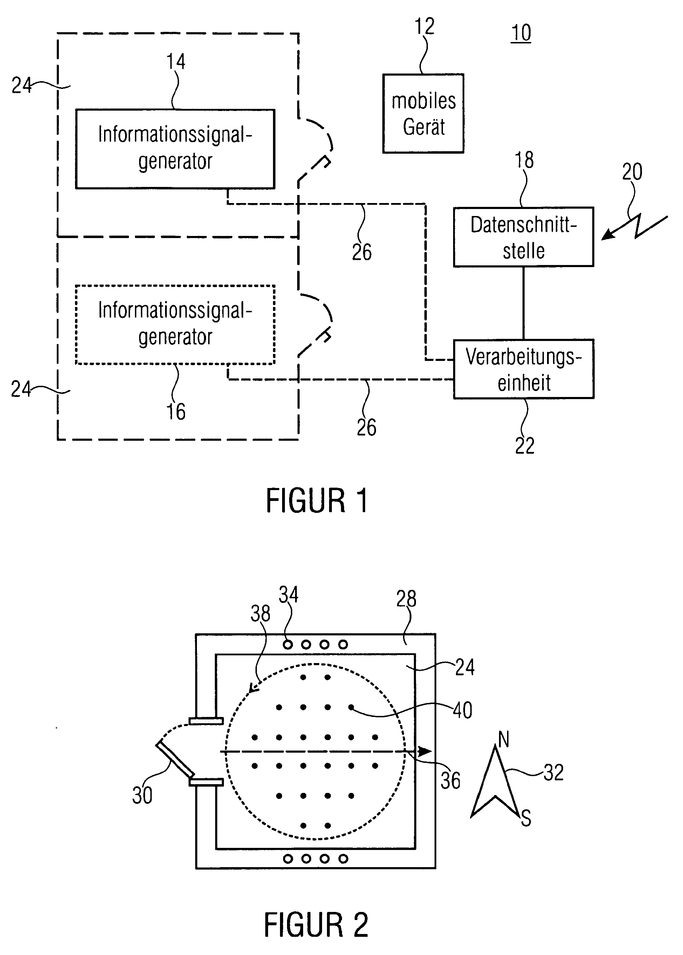

Fig. 1 zeigt zunächst ein Infrastruktursystem, das allgemein mit dem Bezugszeichen 10 angezeigt ist. Das Infrastruktursystem 10 dient einem oder mehreren mobilen Geräten, wobei ein mobiles Gerät 12 exemplarisch in Fig. 1 dargestellt ist. Das Infrastruktursystem 10 von Fig. 1 umfasst zumindest einen Informationssignalgenerator 14, der ausgebildet ist, um ein magnetisches Feld zu erzeugen, das mit einer Information moduliert ist, und zwar, wie es im Folgenden noch beschrieben wird, niederfrequent mit einer Modulationsfrequenz von beispielsweise kleiner 1 kHz oder sogar kleiner 200 Hz und gemäß nachfolgend beschriebener Ausführungsbeispiele sogar kleiner 50 Hz. In Fig. 1 ist exemplarisch noch ein weiterer Informationssignalgenerator 16 dargestellt, der optional vorhanden sein kann und beispielsweise zur Modulation eine Information verwendet, die sich von der Information des Informationssignalgenerators 14 unterscheidet. Die Information kann beispielsweise eine Orts- und/oder Identifikationsinformation sein, d.h. einen Ort angeben, an dem der jeweilige Informationssignalgenerator 14 bzw. 16 positioniert ist, oder eine ID des jeweiligen Informationssignalgenerators 14 bzw. 16 angeben, die letzterem beispielsweise eindeutig zugeordnet ist.

Das Infrastruktursystem 10 umfasst ferner eine Datenschnittstelle 18 zum Empfang einer Meldung von dem mobilen Gerät 12 über eine Hochfrequente-Elektromagnetische-Welle-Schnittstelle 20, wie z.B. eine optische Verbindung, eine Funkverbindung oder eine Verbindung zum Internet, mit dem das mobile Gerät 12 über eine Hochfrequente-Elektromagnetische-Welle-Drahtlosstrecke 20 ebenfalls in Verbindung steht.

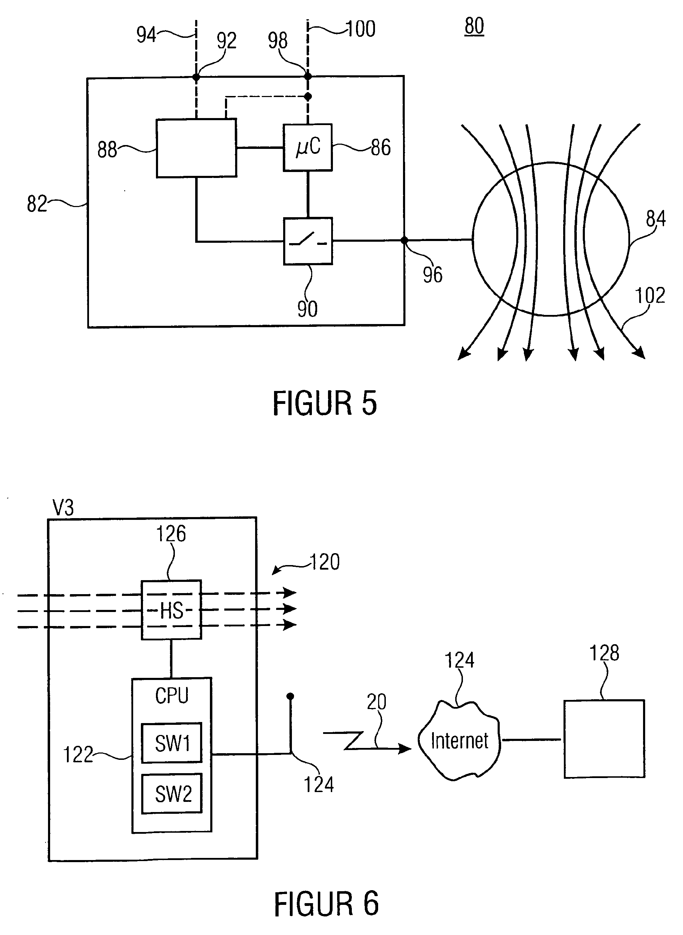

Nachfolgend wird Bezug nehmend auf die Figuren 5 bis 7 jeweils ein Ausführungsbeispiel für einen Informationssignalgenerator bzw. ein mobiles Gerät beschrieben, bei dem das Internet zur Weiterleitung der Informationen verwendet wird, die über die Hochfrequente-Elektromagnetische-Welle-Drahtlosstrecke 20 transportiert werden. Die Verarbeitungseinheit 22 kann somit an jedwedem Ort stehen oder sogar über mehrere Orte verteilt sein, wie z. B. über Computer eines Computernetzwerks, und kann auch örtlich getrennt von der Datenschnittstelle 18 sein, welche ihrerseits wiederum eine einer Vielzahl oder Mehrzahl von Datenschnittstellen darstellen kann. In anderen Worten kann es möglicherweise auch viele Verarbeitungseinheiten geben, die möglicherweise auch gekoppelt sein können, wie z.B. über das Internet. Die Verbindung zwischen 22 und 14/16 kann somit kurz, aber möglicherweise auch lang sein, wie z.B. über das Internet.

Schließlich umfasst das Infrastruktursystem 10 ferner eine Verarbeitungseinheit 22, die ausgebildet ist, um die Meldung von dem mobilen Gerät 12 auf ein Zusammenpassen mit der Information hin zu überprüfen, mit der das magnetische Feld des Informationssignalgenerators 14 bzw. 16 moduliert ist.

Das Infrastruktursystem von Fig. 1 kann zu unterschiedlichen Zwecken eingesetzt werden. Die Verarbeitungseinheit 22 kann beispielsweise anhand der Meldung überprüfen, wo sich das mobile Gerät 12 befindet. Dazu leitet beispielsweise das mobile Gerät 12 die Information aus der Magnetfeldmodulation über die Schnittstelle 20 und die Datenschnittstelle 18 an die Verarbeitungseinheit 22 weiter, die diese Information wieder eindeutig dem jeweiligen Informationssignalgenerator zuordnen kann und damit die Position des mobilen Gerätes 12 auf die Zelle einschränken kann, in der das magnetische Feld des jeweiligen Informationssignalgenerators 14 ausreicht, um von dem mobilen Gerät 12 erkannt und ausgewertet zu werden. Vorteilhaft ist, dass magnetische Felder mit einem lokal äußerst präzisen Umfang erzeugt werden können. Die Zellen der einzelnen Informationssignalgeneratoren 14 bzw. 16 können deshalb beispielsweise wie gewünscht angeordnet werden, wie z.B. nahtlos aneinandergefügt und/oder ohne Überschneidung oder dergleichen, so dass die Zellgrenzen mit Wänden, Decken bzw. Böden von Zimmern bzw. Räumen 24 eines Gebäudes übereinstimmen, wie es in Fig. 1 angedeutet ist.

Die Informationen, die durch die Informationssignalgeneratoren 14 zur Magnetfeldmodulation verwendet werden, sind aber nicht notwendigerweise auf Orts- bzw. ID-Informationen begrenzt. Während Orts- und/oder ID-Informationen beispielsweise zyklisch wiederholt übertragen werden, kann die Verarbeitungseinheit 22 zusätzlich über einen entsprechenden Kommunikationskanal 26 den jeweiligen Informationssignalgenerator 14 bzw. 16, in dessen Zelle sich das mobile Gerät 12 gerade befindet, anweisen, eine dezidierte Nachricht an das mobile Gerät 12 weiterzuleiten, indem der jeweilige Generator 14 bzw. 16 das magnetische Feld mit dieser Nachricht moduliert. Zudem ist es möglich, dass die Information, die der jeweilige Informationssignalgenerator 14 bzw. 16 zur Magnetfeldmodulation verwendet, einen Schlüssel umfasst, nämlich einen kryptographischen Schlüssel, der dann beispielsweise zur verschlüsselten Kommunikation über die Schnittstelle 20 verwendet wird, und zwar von dem mobilen Gerät 12 zur Datenschnittstelle 18 und/oder umgekehrt.

Insbesondere kann somit das Infrastruktursystem 10 im Rahmen eines Indoor-Navigationssystems eingesetzt werden. In diesem Fall würde die Verarbeitungseinheit 22 beispielsweise nach Bestimmung der Zelle bzw. des Informationssignalgenerators, in dessen Zelle sich das mobile Gerät 12 gerade befindet, entweder diese Position dem mobilen Gerät 12 mitteilen, in welchem wiederum eine entsprechende Verarbeitungseinheit anhand dieser Position in einer Karte nachschlagen würde, um beispielsweise einem Benutzer des mobilen Gerätes 12 einen Navigationsvorschlag zu unterbreiten, oder die Verarbeitungseinheit 22 selbst würde anhand der Position in einer Karte nachschlagen und den Navigationsvorschlag über die Schnittstelle 20 an das mobile Gerät 12 weiterleiten.

Die Verarbeitungseinheit 22 könnte allerdings auch das Wissen darüber, dass sich das mobile Gerät 12 in der Zelle eines bestimmten Informationssignalgenerators 14 befindet, zur Implementierung einer Zutrittskontrolle verwenden. Beispielsweise könnte die Verarbeitungseinheit 22 auf eine erfolgreiche Überprüfung der Meldung des mobilen Gerätes 12 über die Schnittstelle 20 hin, dass nämlich die Meldung zu der Information des jeweiligen Informationssignalgenerators 14 passt, und gegebenenfalls auf eine Überprüfung hin, dass die Meldung des mobilen Gerätes 12 eine ID des mobilen Gerätes 12 umfasst, die zu einer bestimmten autorisierten Gruppe gehört, einen Zutritt zu einem ansonsten nicht zugänglichen Raum gewähren, indem die Verarbeitungseinheit 22 beispielsweise eine entsprechende Tür öffnet oder dergleichen. Auf die gleiche Art und Weise könnte das Infrastruktursystem 10 von Fig. 1 eine Zeiterfassung implementieren, indem die Verarbeitungseinheit 22 beispielsweise die Zeitdauer erfasst, über die hinweg sich das mobile Gerät 12 in einer Zelle oder einer bestimmten Gruppe von Zellen bestimmter Informationssignalgeneratoren befindet. Ganz allgemein könnte auf diese Art und Weise die Verarbeitungseinheit 22 eine bestimmte Gebäudeautomation realisieren. Es wäre natürlich auch möglich, dass die Verarbeitungseinheit 22 die empfangenen Meldungen gemäß vorbestimmter Sicherheitskriterien daraufhin überprüft, ob Verstöße gegen die Sicherheit vorliegen, wie z.B. die Präsenz eines bestimmten Gerätes 12 in einer Zelle, in der sich das Gerät zu diesem Zeitpunkt nicht befinden darf.

Wie bereits im Vorhergehenden erwähnt, ist es auch möglich, dass die Verarbeitungseinheit 22 nutzerspezifische Informationen ortsabhängig, d.h. abhängig von der erkannten Informationssignalgeneratorzelle, an das mobile Gerät 12 überträgt. Diese Übertragung kann sowohl über die Magnetfeldmodulation und den Kommunikationskanal 26 stattfinden als auch über die Schnittstelle 20. Diese nutzerspezifischen Informationen könnten beispielsweise Werbung für das mobile Gerät 12 umfassen. Es ist aber ferner möglich, dass die Verarbeitungseinheit 22 Nutzerschnittstellengeräte, wie z. B. Anzeigeeinheiten oder Lautsprecher, gezielt anspricht, die sich in der Nähe der augenblicklichen Position des Nutzers befinden, so dass der Nutzer über solche zusätzlichen Anzeigeeinheiten oder Lautsprecher oder dergleichen im Aufenthaltsbereich des Nutzers für ihn vorgesehene bzw. auf ihn zugeschnittene, d.h. personalisierte, Informationen erhält, wie z. B Werbung oder dergleichen.

Es könnten aber auch bestimmte Bezahlfunktionen von der Verarbeitungseinheit 22 abhängig davon durchgeführt werden, ob sich das mobile Gerät 12 in einer jeweiligen Informationssignalgeneratorzelle befindet oder nicht.

Die Verarbeitungseinheit 22 könnte auch dazu ausgebildet sein, die erfassten Anwesenheiten des mobilen Gerätes 12 in bestimmten Informationssignalgeneratorzellen mitzuprotokollieren, wie z.B. zum Zwecke statistischer Analysen, wie z.B. für die Bestimmung einer Gebäude/Flächen-Nutzung.

Vorteilhaft an dem System von Fig. 1 ist, dass bereits viele mobile Geräte 12 existieren, die zu dem Infrastruktursystem 10 passen. Mobile Geräte 12 mit einem Magnetfeldsensor und der Fähigkeit zur Kommunikation über die Schnittstelle 20 existieren beispielsweise in Form von Handys oder anderen tragbaren Geräten, wie z.B. tragbaren Multimediaabspielgeräten. Solche mobilen Geräte 12 sind zumeist auch bereits in der Lage, zusätzliche Software auszuführen. In anderen Worten ausgedrückt ist es bei solchen mobilen Geräten 12 meistens möglich, eine zusätzliche Software auf das Gerät zu laden, die dann die entsprechenden geräteseitigen Funktionen übernimmt, wie z.B. das Erkennen und Extrahieren der Magnetfeldmodulationsinformationen und das Senden der Meldung über die Schnittstelle 20 an die Datenschnittstelle 18 sowie die eventuellen weiteren Funktionen, wie sie im Vorhergehenden erwähnt worden sind.

Da zudem der Kommunikationskanal 26, der drahtgebunden oder drahtlos sein kann, nur optional vorhanden sein muss, ist auch der Aufwand zur Implementierung des Infrastruktursystems 10 relativ gering.

Nachdem im Vorhergehenden der grobe Aufbau und das Funktionsprinzip des Infrastruktursystems von Fig. 1 beschrieben worden ist, wird im Folgenden noch auf mögliche Implementierungsdetails eingegangen, die das Infrastruktursystem 10 betreffen. Beispielsweise kann der Informationssignalgenerator 14 eine Antenne aufweisen. Diese Antenne kann als Spule mit oder ohne Kern, Helmholtz-Spule oder Ringantenne ausgebildet sein.

In Fig. 2 ist exemplarisch ein Zimmer 24 mit einer umgebenden Wand 28 und einer Tür 30 gezeigt, wobei zusätzlich bei 32 die Richtung des Erdmagnetfeldes am Ort des Zimmers 24 angegeben ist. Wie es in Fig. 2 gezeigt ist, kann die Antenne beispielsweise als Spule 34 ausgebildet sein, die entlang gegenüberliegender Abschnitte der Wand 28, Decke und Boden, die an das Zimmer 24 angrenzen, geführt ist, um das entlang der Nord-Süd-Achse verlaufende Erdmagnetfeld mit einem künstlichen Magnetfeld zu überlagern. Bei dem Ausführungsbeispiel von Fig. 2 verläuft das künstliche Magnetfeld entlang der Spulenachse 36 quer zum Erdmagnetfeld. Diese Ausrichtung ist aber für die Ausführungsbeispiele der vorliegenden Erfindung aber nicht zwingend. Der Verlauf könnte auch parallel zum Erdmagnetfeld verlaufen, was den Einbauaufwand und die Einbaumöglichkeiten verbessert. Ein Verlauf quer zum Erdmagnetfeld, wie es in Fig. 2 gezeigt ist, kann aber die Detektierbarkeit der Existenz eines Erdmagnetfeldes durch das mobile Gerät, worauf im Folgenden noch eingegangen wird, erleichtern, da die Überlagerung des Erdmagnetfeldes mit dem künstlichen Magnetfeld nicht nur zu einer Betragsänderung des effektiven Magnetfeldes am Ort des mobilen Gerätes 12 führt, sondern auch zu einer Richtungsänderung.

Wie es in Fig. 2 zu sehen ist, ist es auch möglich, eine horizontal verlaufende Spule 38 in der Decke oder der Wand oder dem Boden zu platzieren, um den Grundriss des Zimmers 24 im Wesentlichen zu umschließen, um ein Magnetfeld 40 zu erzeugen, das vertikal und somit wiederum quer zum Erdmagnetfeld verläuft. Die Anzahl der Wicklungen der Spulen 34 bzw. 38, die als Antenne fungieren, kann Eins oder mehr betragen, und insbesondere können sie als Helmholtz-Spule ausgebildet sein. Beispielsweise kann die Spule 38 in einer oberen Hälfte und einer unteren Hälfte der Wand 28 oder in der Decke und dem Boden des Zimmers 24 parallel zueinander verlaufende Windungen aufweisen. Gleiches gilt für die Spule 34 mit horizontalem Magnetfeldverlauf. Auch die Spule 34 kann zwei Spulenabschnitte aufweisen, die entlang der gemeinsamen Spulenachse 36 um eine Ausdehnung des Zimmers 24 oder um einen etwas geringeren Abstand in dieser Richtung beabstandet sind.

Auf die dargestellten Weisen wäre sichergestellt, dass die Modulation des Magnetfeldes 40 bzw. 36 für das mobile Gerät nur in dem Zimmer 24, aber nicht außerhalb erfassbar bzw. die aufmodulierten Informationen aus demselben extrahierbar wären, da die Magnetfeldstärke enorm schnell nach außen abfiele. Die Existenz dieses Magnetfeldes bzw. dessen Modulation ist für das mobile Gerät 12 an Orientierung und Stärke des resultierenden Gesamtmagnetfeldes erkennbar. Um eine Energieersparnis für das mobile Gerät 12 zu bewirken, das aufgrund seiner Mobilität zumeist batteriebetrieben ist, wird gemäß nachfolgend beschriebener Ausführungsbeispiele die Erkennung der Anwesenheit der Magnetfeldmodulation mit einem Energieverbrauch durchgeführt, der kleiner ist als derjenige eines Modus, in den das mobile Gerät 12 übergeht, sobald die Anwesenheit eines künstlichen Magnetfeldes erkannt worden ist. Wie es im Nachfolgenden beschrieben wird, kann beispielsweise für die pure Erkennung der Anwesenheit eines künstlichen Magnetfeldes eines Informationssignalgenerators eine geringere Abtastfrequenz verwendet werden als für die anschließende Unterscheidung, ob das künstliche Magnetfeld, dessen Anwesenheit erkannt worden ist, einer Information bzw. einem Telegramm des Informationssignalgenerators entspricht oder von irgendwo her anders stammt, wie z.B, von einer lokalen Ablenkung des Erdmagnetfeldes durch einen metallenen Gegenstand in der augenblicklichen Umgebung des Nutzers des mobilen Gerätes.

Der Informationssignalgenerator 14 kann ausgebildet sein, um einen mit der Information modulierten Strom durch die Antenne 34 bzw. 38 zu erzeugen.

Eine Modulationsfrequenz, mit der das magnetische Feld mit der Information moduliert wird, kann kleiner als 1 kHz, kleiner als 200 Hz oder aber sogar kleiner als 50 Hz sein. Die Verwendung des Frequenzbereiches unterhalb 50 Hz hat Vorteile, weil dieser Bereich unterhalb der üblichen Spannungsversorgungsfrequenzen von beispielsweise 50 Hz oder 60 Hz liegt, und somit von letzteren nicht überlagert bzw. gestört wird, und weil, wie bereits im Vorhergehenden angedeutet, die Modulationsfrequenz in diesem Bereich durch Magnetfeldsensoren abtastbar ist, wie z. B. durch die unten noch genannten Hall-Sensoren oder dergleichen, die in dem mobilen Gerät zur Magnetfelddetektion verwendet werden. Die niedrigere Modulationsfrequenz geht natürlich mit einer niedrigere Übertragungsrate einher. Diesem Problem kann damit begegnet werden, dass die Information bzw. das Telegramm komprimiert (codiert) wird.

Zu Fig. 2 wird noch erwähnt, dass die dargestellten Möglichkeiten für ein Magnetfeldzelle und Antennen lediglich exemplarisch sind, und dass vor allem abhängig von der Anwendung auch sehr kleine Antennen verwendet werden können, da für viele Anwendungen eine Reichweite von wenigen Millimetern ausreichend ist.

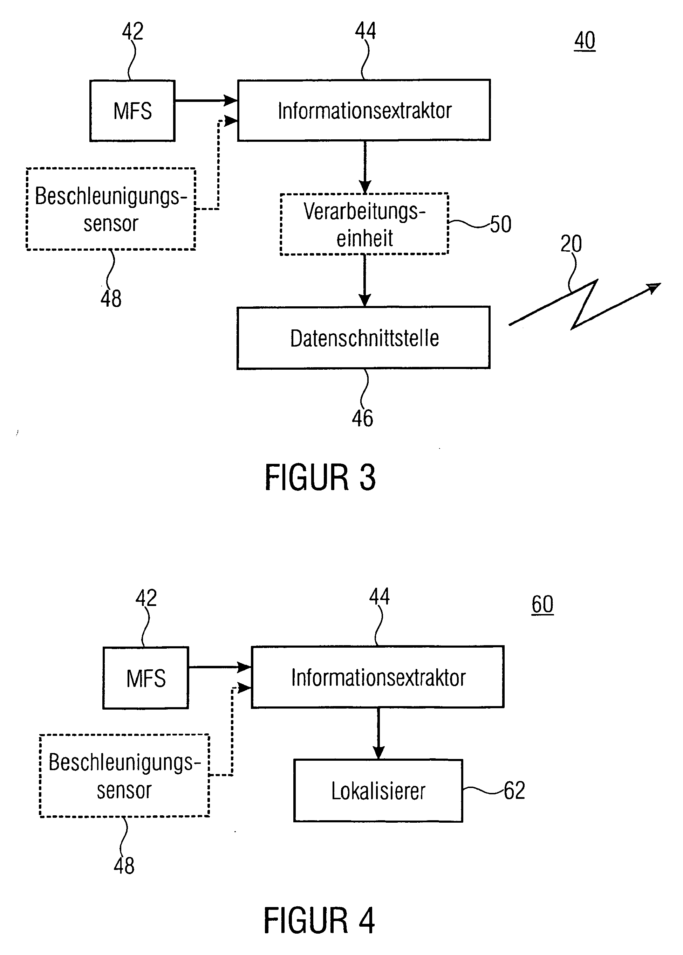

Nachdem im Vorhergehenden mögliche Implementierungsdetails für das Infrastruktursystem 10 beschrieben worden sind, wird im Folgenden Bezug nehmend auf Fig. 3 ein Ausführungsbeispiel für ein mobiles Gerät näher beschrieben. Das mobile Gerät von Fig. 3 ist allgemein mit dem Bezugszeichen 40 angezeigt und umfasst einen Magnetfeldsensor 42, einen Informationsextraktor 44 sowie eine Datenschnittstelle 46. Optional können noch, wie es in Fig. 3 angezeigt ist, ein Beschleunigungssensor 48 und eine Verarbeitungseinheit 50 vorgesehen sein.

Der Magnetfeldsensor 42 erfasst ein anliegendes Magnetfeld, das beispielsweise, je nachdem, wo sich das mobile Gerät 40 derzeit befindet, das Erdmagnetfeld sein kann oder eine Überlagerung des Erdmagnetfeldes mit dem künstlich erzeugten Magnetfeld eines der Informationssignalgeneratoren 14 bzw. 16 (Fig. 1). Der Magnetfeldsensor 42 umfasst beispielsweise einen Hall-Sensor, und zwar einen 1-, 2- oder 3-Achsen-Hall-Sensor. Bei dem Magnetfeldsensor 42 kann es sich allerdings auch um einen anderen Sensor handeln, wie z.B. einen XMR-Sensor zur Messung des Magnetfeldes entlang einer, zweier oder dreier Achsen. Wiederum alternativ ist es möglich, dass der Magnetfeldsensor 42 eine oder mehrere Spulen aufweist, deren Spulenachsen beispielsweise zueinander senkrecht stehen, und zwar mit jeweils einem Signalverstärker und einem A/D-Wandler oder einem Multiplexer, der zwischen den Spulen und dem Signalverstärker platziert ist, wobei der A/D-Wandler sich an den Ausgang des Signalverstärkers anschließt.

Der Informationsextraktor 44 ist ausgebildet, um die Information aus dem Magnetfeld zu extrahieren, das von dem Magnetfeldsensor 42 erfasst worden ist, nämlich die Information, mit der das Magnetfeld moduliert ist, wie es im Vorhergehenden beschrieben worden ist.

Die Datenschnittstelle 46 ist wiederum dazu vorgesehen, eine Meldung über die Hochfrequente-Elektromagnetische-Welle-Schnittstelle 20 zu senden, wobei die Meldung von der Magnetfeldmodulationsinformation abhängt, wie z.B. sie direkt umfasst, ggf. zusammen mit einer ID des mobilen Gerätes 40, wie es im Vorhergehenden bereits beschrieben worden ist.

Der Informationsextraktor 44 kann ausgebildet sein, um in einem Erfassungsmodus zyklisch eine Überlagerung des Erdmagnetfeldes mit einem künstlichen Magnetfeld, nämlich dem künstlichen Magnetfeld eines der Informationssignalgeneratoren, zu erkennen, um nur dann eine Informationsextraktion durchzuführen, die zumeist mehr Leistung benötigt. Zum Beispiel kann der Informationsextraktor 44 ausgebildet sein, den Magnetfeldvektor in drei zueinander senkrechten Raumrichtungen (wie z. B. in Bezug auf ein lokales Bezugssystem des mobilen Gerätes) zu erfassen und zur Anwesenheitserfassung einen Betrag und/oder eine Orientierung des Magnetfeldvektors auswerten. Beispielsweise kann in dem Erfassungsmodus die Summe der drei Magnetfeldvektorkomponenten entlang der drei genannten zueinander senkrechten Raumrichtungen addiert bzw. akkumuliert werden, um ein Maß für die Magnetfeldstärke zu erhalten. Stärke und/oder Orientierung des erfassten Magnetfeldes können mit entsprechenden Schwellwerten verglichen werden. Die Magnetfeldstärke kann beispielsweise mit einem festen Schwellwert verglichen werden. Das durch die Informationssignalgeneratoren 16 erzeugte Magnetfeld ist beispielsweise in etwa so groß wie oder etwas größer als die Erdmagnetfeldstärke, wie z. B. größer als 40 µT oder 60µT. Als Schwellwert für Magnetfeldstärke und/oder Magnetfeldorientierung eines jeden Abtastwertes kann aber auch ein Langzeitmittelwert bzw. ein laufendes Mittel der Folge von Abtastwerte der abgetasteten Magnetfeldstärke und/oder Magnetfeldorientierung verwendet werden. Dazu ist zu bemerken, dass Ablenkungen des Erdmagnetfeldes in einem Gebäudeinneren und in der Nähe von metallischen Gegenständen stets vorhanden sind, so dass eine geeignete Bedingung bzw. ein geeigneter Schwellwert verwendet werden sollte, um einerseits nicht zu oft fälschlicherweise die Existenz eines zusätzlichen Magnetfeldes zu detektieren und andererseits nicht zu oft ein anwesendes Magnetfeld eines der Informationssignalgeneratoren zu "übersehen".

Wie oben erwähnt, kann der Informationsextraktor beispielsweise eine Langzeitmittlung des Ausgangssignals des Magnetfeldsensors 42 durchführen, um einen Bezugswert bzw. Schwellwert für die Magnetfeldstärke und/oder Magnetfeldorientierung zu erhalten, wie z.B. über Mittelungszeitdauern hinweg, die um beispielsweise mehr als das 100-fache des Abtastintervalls bzw. der Wiederholungszeitdauer betragen, die für die Abtastung des Magnetfeldes zur Erfassung der Anwesenheit eines künstlichen Magnetfelds verwendet wird. Der Informationsextraktor 44 kann beispielsweise das Ausgangssignal eines optional zusätzlich vorgesehenen Beschleunigungssensors 48 verwenden, um die Magnetfeldvektorausgabe des Magnetfeldsensors 42 bezüglich der relativen Lage des mobilen Gerätes 40 zum geographischen (ortsfesten) Koordinatenbezugsystem während der Integration laufend zu korrigieren bzw. um die im Rahmen einer evtl. Langzeitmittelung zum Zweck des Bestimmung eines Schwellwertes gemittelten Abtastwerte auf ein gemeinsames Bezugsystem zu transformieren.

Erfindungsgemäss, findet die Modulierung mit der Modulationsinformation, später Telegramm genannt, unipolar oder bipolar statt. Im unipolaren Fall können soeben getätigte Ausführungen ohne weiteres zur Anwesenheitserfassung des künstlichen Magnetfeldes verwendet werden.

Wenn der Magnetfeldsensor 42 so ausgebildet ist, dass seine Magnetfeldabtastungen eine Integration des anliegenden Magnetfeldes über eine Integrationszeitdauer darstellen, wie z.B. über das Abtastintervall zwischen aufeinander folgenden Abtast- bzw. Auslesezeitpunkten hinweg, die größer als eine Periodendauer der Magnetfeldmodulation ist, dann kann die Abtastfrequenz, mit der die Magnetfeldabtastungen durch den Magnetfeldsensor 42 durchgeführt werden, kleiner als die Modulationsfrequenz sein. Ist allerdings der Magnetfeldsensor 42 derart ausgebildet, dass die einzelnen Abtastungen über eine Integrationszeitdauer hinweg gebildet werden, die kleiner als die Periodenlänge der Magnetfeldmodulation ist, beispielsweise instantan, so sollte die Abtastung während des Erkennungsmodus mit einer Frequenz durchgeführt werden, die größer als die Modulationsfrequenz ist. Bei Implementierung der Funktionalitäten des mobilen Geräts, wie sie im Vorhergehenden beschrieben worden sind, als eine Software, die auf unterschiedliche mobile Geräte mit einem Prozessor und einem entsprechenden Betriebssystem installierbar ist, um von dem Prozessor entsprechend ausgeführt zu werden, wird es bevorzugt, wenn die Abtastfrequenz größer als die Modulationsfrequenz ist, um nicht auf die entsprechende Implementierung des auf dem mobilen Gerät vorhandenen Magnetfeldsensors angewiesen zu sein. Bei bipolarer Modulation könnte beispielsweise eine Magnetfeldsensorabtastung mit einer Frequenz durchgeführt werden, die in etwa gleich oder größer der Modulationsfrequenz der Informationssignalgeneratoren ist, wie z.B. mehr als das doppelte derselben. Bei Erkennen einer Überlagerung des Erdmagnetfeldes mit einem künstlichen Magnetfeld wechselt der Informationsextraktor 44 beispielsweise in einen Scanmodus. In dem Scanmodus synchronisiert sich der Informationsextraktor 44 beispielsweise auf eine Präambel ein, mit der das Magnetfeld durch die Informationssignalgeneratoren 14 zyklisch moduliert wird, woraufhin der Informationsextraktor 44 nachfolgend die eigentlichen Informationen aus dem Magnetfeld extrahiert, mit denen das Magnetfeld moduliert ist. In dem Scanmodus kann die Abtastrate gegenüber dem Erkennungsmodus erhöht werden, mit der der Magnetfeldsensor das Magnetfeld abtastet. Der Scanmodus kann zur Erkennung eines Telegramms eine Korrelation des abgetasteten Magnetfeldverlaufs mit einem Referenzsignal oder aber die Durchführung einer Vorwärtsfehlererkennung mittels Redundanzinformationen in dem Telegramm umfassen. Ergibt die Korrelation kein ausreichendes Maximum oder ergibt die Fehlererkennung Fehler, so ist der Scanmodus erfolglos, und der Informationsextraktor geht davon aus, dass das erkannnte künstliche Magnetfeld nicht von einem der Informationssignalgeneratoren stammt. Der Scanmodus ist beispielsweise zeitlich begrenzt. Die Zeitdauer des Scanmodus kann von der zu erwartenden maximalen Zeitdauer des Telegramms abhängen, das von den Informationssignalgeneratoren ausgegeben wird. Nach dem Scanmodus kehrt das mobile Gerät 12 beispielsweise wieder in den Erkennungsmodus zurück, wenn kein Telegramm erkannt worden ist.

Die Datenschnittstelle 46 kann beispielsweise einen optischen Sender oder einen Funksender umfassen, wobei es sich dementsprechend bei der Schnittstelle 20 um eine optische Verbindung oder eine Funkverbindung handeln kann, wie es im Vorhergehenden bereits beschrieben worden ist.

Bei dem mobilen Gerät 40 kann es sich insbesondere beispielsweise um ein Handy, einen tragbaren Computer, ein tragbares Multimediaabspielgerät , oder eine mobile Spielkonsole handeln.

Wie es im Folgenden noch näher erörtert werden wird, kann es insbesondere auch sein, dass die Datenschnittstelle 46 eine aktivierbare und deaktivierbare Verbindung 20 nutzt und ausgebildet ist, um die Informationen aus dem Magnetfeld, wie sie von dem Extraktor 44 aus demselben extrahiert worden sind, zwischenzuspeichern, während die Verbindung 20 nicht aktiviert ist.

Die Verarbeitungseinheit 50 kann beispielsweise ein Prozessor sein, der in der Lage ist, Programme auszuführen, die auf das mobile Gerät 40 geladen werden. Damit kann die Verarbeitungseinheit 50 teilweise Aufgaben des Informationsextraktors 44 und/oder der Datenschnittstelle 46 übernehmen. Die Verarbeitungseinheit 50 kann dabei zusätzliche Funktionen übernehmen, wie z. B. das Durchführen einer verschlüsselten Kommunikation über die Schnittstelle 20 mittels eines Schlüssels, den dieselbe über den Informationsextraktor 44 aus der Magnetfeldmodulation erhalten hat.

Fig. 4 zeigt ein weiteres Ausführungsbeispiel für ein mobiles Gerät. Das mobile Gerät von Fig. 4 ist allgemein mit dem Bezugszeichen 60 angezeigt. Elemente des mobilen Gerätes 60, die zu denjenigen von Fig. 3 gleich sind, sind mit dem gleichen Bezugszeichen versehen worden und von einer wiederholten Beschreibung dieser Elemente und ihrer Funktionsweise wird im Folgenden zur Vermeidung von Wiederholungen abgesehen.

Im Unterschied zu dem mobilen Gerät von Fig. 3 umfasst das mobile Gerät 60 von Fig. 4 allerdings keine Datenschnittstelle für die Schnittstelle 20, sondern einen Lokalisierer 62, der beispielsweise ebenfalls in Form eines Prozessors mit einem entsprechenden darauf ablaufenden Programm ausgebildet sein kann. Der Lokalisierer 62 ist ausgebildet, um aus Orts- und/oder Identifikationsinformationen, die der Informationsextraktor 44 aus dem modulierten Magnetfeld extrahiert, eine Position des mobilen Gerätes 60 zu bestimmen. Dazu schlägt der Lokalisierer 62 beispielsweise in einer entsprechenden Datenbank nach, in der die Positionen der Informationssignalgeneratoren gespeichert sind. In anderen Worten ausgedrückt übernimmt gemäß dem Ausführungsbeispiel von Fig. 4 der Lokalisierer 62 die Aufgabe, die im Vorhergehenden Bezug nehmend auf Fig. 1 in Verbindung mit der Verarbeitungseinheit 22 beschrieben worden ist, wie z.B. das Nachschlagen anhand der Positionsinformation in einer Karte oder das Nachschlagen anhand der Identifikationsinformation aus der Magnetfeldmodulation in einer Datenbank, die jeder Informationssignalgeneratoridentifikation den entsprechenden Ort des entsprechenden Informationssignalgenerators zuordnet, um anhand dieser Information in einer entsprechenden Karte nachzuschlagen.

In dem Fall des Ausführungsbeispiels von Fig. 4 muss das Infrastruktursystem im Unterschied zu Fig. 1 natürlich nicht über die Datenschnittstelle 18 verfügen. Auch die Existenz der Verarbeitungseinheit 22 ist in diesem Fall nicht erforderlich. Die Vorteile des Gesamtsystems aus mobilem Gerät 60 und dem einen oder der mehreren Informationssignalgeneratoren 14 und 16 ergibt sich aber dennoch aus dem Vorteil der örtlich näher definierten Ausdehnung der Magnetfeldzellen des bzw. der Informationssignalgeneratoren. Beispielsweise könnte auf diese Weise in jeder Magnetfeldmodulationszelle ein anderer kryptographischer Schlüssel zur Verfügung gestellt werden. Fig. 1 stellt in der linken Hälfte (ohne Elemente 18-22 und 26) somit auch ein Beispiel für ein In-House-Infrastruktursystem für ein mobiles Gerät mit einer Mehrzahl von Informationssignalgeneratoren 14 dar, die ausgebildet ist, um ein magnetisches Feld zu erzeugen, das jeweils mit einer Information moduliert ist, die für die Informationssignalgeneratoren 14 unterschiedlich ist. Die Modulationsfrequenz kann, wie bereits erwähnt, kleiner als 50 Hz sei, und jeder Informationssignalgenerator 14 kann eine Antenne aufweisen, die als eine Spule mit oder ohne Kern, Helmholtz-Spule oder Ringantenne ausgebildet ist, die einer Wand, einer Decke, einem Boden, einer Tür, einem Türrahmen, einem Fenster oder einem Fensterrahmen untergebracht ist. Zusätzlich oder alternativ ist auch eine Unterbringung in einem Teppich, einem Fahrzeug, Kleidung, einer Kasse oder einem Automaten, wie z.B. einem Ticketschalter oder einem anderen technischen Gerät, möglich.

Im Folgenden wird nun Bezug nehmend auf Fig. 5 ein Ausführungsbeispiel für einen Informationssignalgenerator beschrieben. Im Anschluss daran werden noch weitere Ausführungsbeispiele für mobile Geräte beschrieben. Bei der nachfolgenden Beschreibung werden dabei die Informationen, die zur Modulation des magnetischen Feldes verwendet werden, auch manchmal als Telegramm bezeichnet.

Der Informationssignalgenerator von Fig. 5 ist allgemein mit dem Bezugszeichen 80 angezeigt und umfasst eine modulierte Stromquelle 82 und eine Antenne 84, die beispielsweise einer der Antennen 34 bzw. 38 von Fig. 2 entsprechen kann. Die modulierte Stromquelle 82 kann entweder ortsfest installiert werden, wie es in Fig. 2 gezeigt worden war, oder an mobilen Gegenständen, die dann von den mobilen Geräten identifiziert werden können, nämlich anhand der Magnetfeldmodulation. Die modulierte Stromquelle 82 umfasst einen Mikroprozessor 86 und eine Stromquelle 88 sowie einen Schalter 90. Die Stromquelle 88 kann über einen Anschluss 92 mit einer externen Energieversorgung 94, wie z.B. einem öffentlichen Stromnetz, koppelbar sein, und ein Ausgang der Stromquelle 88 kann über den Schalter 90 mit einem Ausgang 96 der modulierten Stromquelle 82 verbunden sein, um selektiv Strom durch die an den Anschluss 96 angeschlossene Antenne 84 zu leiten bzw. nicht zu leiten. Der Mikrocontroller 86 ist mit dem Schalter und der Stromquelle 88 verbunden und kann zudem über eine externe Datenverbindung 98 mit dem Internet oder einem anderen Datennetz 100 verbindbar sein, über welche Verbindung beispielsweise auch die vorerwähnte Kommunikation über den Kanal 26 stattfindet.

Bei dem Ausführungsbeispiel von Fig. 5 erfolgt die Modulation des magnetischen Feldes 102 somit mittels einer elektronischen Schaltung und des Mikroprozessors 86. Insbesondere ist die Stromquelle 88 optional an eine elektrische Energiequelle anschließbar. Die Energiequelle ist beispielsweise eine Batterie, ein Akkumulator, ein Stromnetz oder ein Kommunikationsnetz mit integrierter Energieversorgung, wie z.B. gemäß IEEE 802.3af/at. Die Modulierung des Stroms kann, wie im Vorhergehenden erwähnt, mit sehr niedrigen Frequenzen, von beispielsweise 0 bis ca. 50 Hz, erfolgen. Die Modulierung kann zudem gemäß einer digitalen Information, d.h. einem Telegramm, erfolgen. Die Modulierung des Stroms kann entweder unipolar stattfinden, in welchem Fall der Stromfluss immer in einer Richtung durch die Antenne 84 fließt und somit die Ablenkung des Erdmagnetfeldes immer in einer Richtung stattfindet, oder bipolar, in welchem Fall der Stromfluss durch die Antenne 84 umgepolt wird, wodurch das künstlich erzeugte Magnetfeld bei Umpolung seine Richtung ändert. Optional kann auch eine Anpassung der Stromstärke manuell durch den Benutzer über eine in Fig. 5 nicht näher dargestellte Benutzerschnittstelle oder durch den Mikrocontroller 86 erfolgen, gegebenenfalls über eine entsprechende Konfiguration durch die Verarbeitungseinheit 22 (Fig. 1).

Das Telegramm wird entweder ständig oder intermittierend zyklisch wiederholt. Das Telegramm kann optional codiert werden, wie z.B. mittels NRZ, NRZi, Manchester usw. Der Mikroprozessor 86 kann entweder fest zur Generierung eines Telegramms programmiert sein oder kann umprogrammiert werden, wie z.B. über die Schnittstelle 98. Gleiches gilt für die optionale Einstellmöglichkeit der Stromstärke durch den Mikrocontroller 86. Die Umprogrammierung kann manuell oder über das vorerwähnte Kommunikationsnetz 100 erfolgen. Das Telegramm kann aus mehreren Teilen bestehen. Zum Beispiel besteht das Telegramm zu Beginn aus einer Präambel zum Zweck der Empfängersynchronisation. Danach kann ein individuelles Identifikationsmerkmal folgen. Eine sich eventuell anschließende Nutzinformation kann optional komprimiert oder verschlüsselt sein.

Die Antenne 84, die an die modulierte Stromquelle 82 angeschlossen ist und ein moduliertes magnetisches Feld erzeugt, kann in Form, Ausführung und Abmessung variieren. Luftspulen mit und ohne Kern, Helmholtz-Spulen, Ringleiter mit einer oder mehreren Windungen usw. sind möglich.

Eine Kombination der modulierten Stromquelle 82 bzw. der Stromstärke und der Antenne 84 bestimmen eine Reichweite des Signals bzw. eine Reichweite einer Erfassbarkeit der Magnetfeldmodulation für die mobilen Geräte. Es lassen sich auf diese Weise gewünschte Reichweiten von nur wenigen Zentimetern, wie z.B. nur innerhalb einer Helmholtz-Spule, bis zu mehreren Metern erzeugen. Sehr kurze Reichweiten können typischerweise zur abhörsicheren Übertragung von kryptographischen Schlüsseln verwendet werden. Größere Reichweiten sind zur Lokalisierung von Personen und Gegenständen oftmals wünschenswert.

Gemäß dem Ausführungsbeispiel von Fig. 6 umfasst ein mobiles Endgerät 120 eine CPU. Es kann sich beispielsweise um ein programmierbares Mobiltelefon bzw. Smartphone handeln. Auf der CPU 122 kann ein Betriebssystem laufen. Das mobile Endgerät 120 kann einen oder mehrere Netzwerkzugänge, wie z.B. GSM/UMTS, LTE, WiMax, WLAN usw., zur Breitbandkommunikation mit dem Internet 124 umfassen. Dazu umfasst das mobile Gerät 120 beispielsweise eine Antenne 124, um drahtlos über die Schnittstellenverbindung 20 Verbindung mit dem Internet 124 zu erhalten. Zusätzlich ist das Gerät 120 mit einem elektronischen Kompass ausgestattet, der gemäß dem Ausführungsbeispiel von Fig. 6 einen Hall-Sensor 126 umfasst und daher in der Lage ist, statische oder sich langsam ändernde Magnetfelder zu messen, d.h. als der oben genannte Magnetfeldsensor 42 fungieren kann.

Eine Software SW1 ist auf dem Endgerät 120 installiert worden und ihre Aufgabe besteht beispielsweise zunächst darin, wie im Vorhergehenden erwähnt zyklisch die Anwesenheit eines künstlichen Magnetfeldes zu erkennen, wie es von beispielsweise einem der Informationssignalgeneratoren erzeugt wird. Dies wird beispielsweise dadurch erzielt, dass der akkumulierte Feldvektor des Erdmagnetfeldes beobachtet wird, wie z.B. über eine Akkumulation der drei Achsen. Im Falle des Eintauchens des Hall-Sensors 126 in das von einem der Informationssignalgeneratoren erzeugten künstlichen Magnetfeldes wird eine Änderung des Magnetfeldes durch die Software SW1 beobachtet, und zwar sowohl in Richtung als auch Stärke, die in der Natur nicht vorkommt. Sobald eine solche Änderung erkannt wird, wird der Scanmodus der Software SW1 aktiviert.

Im Scanmodus wird der Hall-Sensor 126 des Geräts 120 möglichst oft abgefragt, wie z. B. 50 - 100 mal pro Sekunde, bis eine Telegramm-Präambel erkannt wird, die beispielsweise in einem konstanten Wechsel des Magnetfeldes 102 im Takt der Bitrate besteht. Da die maximale Bitrate in etwa beispielsweise nur bis zur Hälfte der Abfragerate reicht, ist die Software SW1 in der Lage, ausreichend genau die Bitrate und den Bitmittelpunkt zu identifizieren, so dass weitere Messungen mit der korrekten Bitrate und zum Zeitpunkt des Bitmittelpunkts erfolgen können. Da die Telegramme relativ kurz sind, wirkt sich eine kleine zeitliche Ungenauigkeit bei dem Empfang des restlichen Telegramms nicht negativ aus. Anschließend wird durch die Software SW1 der Rest des Telegramms verarbeitet, wie z. B. decodiert, und kann möglicherweise anderen Anwendungen auf dem mobilen Endgerät 120 zur Verfügung gestellt werden.

Eine weitere Software SW2 auf dem mobilen Endgerät 120 überwacht beispielsweise die Ergebnisse der Software SW1 und meldet Änderungen des Telegramminhalts, wie z.B. Ortsinformationen und kryptographische Schlüssel usw., über eine Internetverbindung an einen Server im Internet, dessen Adresse konfigurierbar gehalten ist und beispielsweise die Aufgaben der vorerwähnten Verarbeitungseinheit 22 aus Fig. 1 übernimmt. Der Server ist in Fig. 6 mit dem Bezugszeichen 128 angezeigt.

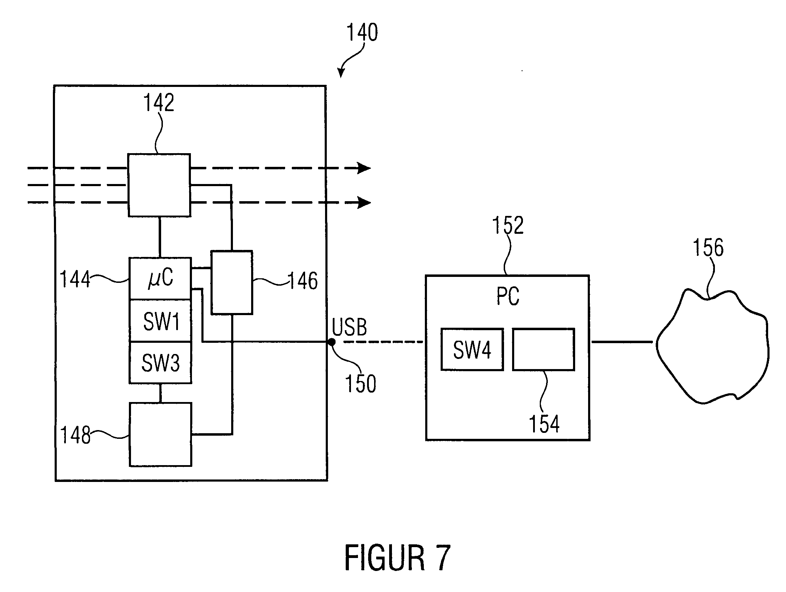

Fig. 7 zeigt ein mobiles Gerät 140, das als mobiler Orts- und Identifikationsspeicher dienen kann. Es umfasst neben einem Magnetsensor 142 einen Mikrocontroller 144, eine Leistungsversorgung 146, einen Speicher 148 und eine Kommunikationsschnittstelle 150. Die Leistungsversorgung 146 ist beispielsweise eine Batterie oder ein Akkumulator und versorgt Mikrocontroller 144, Magnetfeldsensor 142 und Speicher 148 mit Leistung. Der Mikrocontroller 144 ist mit dem Magnetfeldsensor 142 und dem Speicher 148 sowie mit der Kommunikationsschnittstelle 150 gekoppelt. Wie im Vorhergehenden bereits beschrieben, kann der Magnetfeldsensor 142 ein Hall-Sensor sein. Allerdings kann der Hall-Sensor 142 ebenso wie der Hall-Sensor 126 natürlich auch durch einen anderen Sensor zur Erfassung von quasi statisch bzw. sich langsam ändernden Magnetfeldern 102 gebildet sein, wie z.B. durch Spulen mit sich daran anschließendem Verstärker und A/D-Wandler. Die Kommunikationsschnittstelle kann beispielsweise eine USB-Schnittstelle sein. Allerdings ist es auch möglich, dass die Kommunikationsschnittstelle 150 eine andere kabelgebundene oder eine kabellose Spezifikation erfüllt. Eine Software SW1 ist auf dem Gerät 140 installiert, um von dem Mikrocontroller 144 verarbeitet zu werden. Die Software SW1 entspricht funktional der Software SW1 des Ausführungsbeispiels von Fig. 6.

Eine weitere Software SW3 ist auf dem Gerät 140 installiert und sorgt, wenn dieselbe von dem Mikrocontroller 144 verarbeitet wird, dafür, dass die Ergebnisse bzw. die Informationen, die von der Software SW1 in Funktion der Erfüllung ihrer Aufgaben als Informationsextraktor aus dem künstlichen Magnetfeld 102 bezogen werden, in dem Speicher 148 des Gerätes 140 abgelegt werden. Bei dem Speicher 148 des mobilen Gerätes 140 kann es sich beispielsweise um einen nichtflüchtigen Speicher handeln. Ein flüchtiger Speicher ist allerdings ebenso möglich. Sobald das mobile Gerät 140 an ein Datenverarbeitungsgerät 152, wie z.B. einen PC, über die Schnittstelle 150 verbunden wird, liest das Datenverarbeitungsgerät 152 die Daten aus dem Speicher 148 aus. Diese Aufgabe wird beispielsweise von einer Software SW4 übernommen, die auf dem Datenverarbeitungsgerät 152 ausgeführt wird. Die ausgelesenen Daten werden in eine Datenbank 154 in dem Datenverarbeitungsgerät 152 übertragen, die von anderen Anwendungen und Diensten genutzt werden kann, wie z.B. über das Internet 156. Die Stromversorgung des mobilen Speichers 156 erfolgt, wie bereits erwähnt, beispielsweise über eine Batterie, einen Akkumulator oder durch eine externe Speisung.

Ebenso wie bei den Ausführungsbeispielen von Fig. 1 - 4 können die Meldungen, die die mobilen Geräte über die Schnittstelle 20, 150 bzw. 124 nach außen weiterleiten, die Informationen enthalten, die aus der Magnetfeldmodulation extrahiert worden sind, sowie die Identifikation des jeweiligen mobilen Geräts selbst. So kann die Meldung beispielsweise eine Gebäude-ID des Gebäudes aufweisen, in welchem der jeweilige Informationssignalgenerator steht, die Positions-ID des jeweiligen Informationssignalgenerators, eine Geräte-ID des mobilen Gerätes oder alternativ oder zusätzlich irgendeine andere eindeutig dem Gerät zuordenbare ID. Die ID kann beispielsweise auch der jeweiligen Software eindeutig zuordenbar sein, die auf dem jeweiligen mobilen Gerät abläuft und die vorerwähnten Aufgaben des mobilen Gerätes übernimmt.

Wie es ebenfalls bereits Bezug nehmend auf Fig. 6 kurzzeitig erwähnt worden ist, kann es sich bei der Verarbeitungseinheit 22 um einen zentralen Server handeln, wie z.B. einen Lokalisierungs- und Identifizierungsserver, oder ein System, welches von einer geschlossenen Benutzergruppe genutzt werden kann, wie z.B. eine Firma. Der Server 128 kann beispielsweise eine Datenbank umfassen, in der die Lokalisierungs- und/oder Schlüsselinformationen der mobilen Geräte sowie deren Geräte-ID gespeichert sind. Auf diese Daten können entweder externe Anwendungen und Dienste zugreifen oder eine Datenbankanwendung auf dem Server 128 übermittelt nach Eintreffen einer bestimmten Lokalisierungs- oder Schlüsselinformation eines bestimmten mobilen Gerätes weitere Informationen an dieses bestimmte Gerät, die mit dieser Lokalisierungs- oder Schlüsselinformation verknüpft sind, wie z.B. Informationen zum Aufenthaltsort oder eine Rechnung nebst optionaler Metainformation, wie z.B. einen Link bzw. eine URL oder eine Anwendung, zur Begleichung derselben.

Obige Ausführungsbeispiele beschrieben somit unter anderem auch ein Ortungs- und Identifikationssystem mit ortsfesten oder mobilen Telegrammgeneratoren zur Erzeugung magnetischer Felder zur Übertragung von Orts- und/oder Identifikationsinformationen an mobile oder ortsfeste Geräte mit Magnetfeldsensoren, die einer Person oder einem Gegenstand zugeordnet sind. Dabei können die Telegrammgeneratoren eine Stromquelle 82 und eine Antenne 84 aufweisen, wobei die Stromquelle durch einen Mikrocontroller 86 gesteuert werden kann und ein Stromfluss durch die Antenne 84 erzeugt wird, der eine Telegramminformation enthält. Das mobile Endgerät kann mit einem Magnetfeldsensor 42, 126 bzw. 142 ausgestattet sein, über einen Internetzugang verfügen, wie z.B. über die Schnittstelle 20, 124. Eine Software kann auf dem jeweiligen Endgerät ablaufen, die in der Lage ist, die Telegramminformationen aus dem künstlichen magnetischen Feld der Telegrammgeneratoren zu extrahieren und weiteren Anwendungen, wie z.B. dem Lokalisierer 62, auf dem Gerät oder anderen Geräten 22 bzw. 128 im Internet zur Verfügung zu stellen. Ein mobiles Gerät kann aber auch einen Magnetfeldsensor 142 aufweisen und über einen Speicher 148 sowie eine nicht ständig aktive Kommunikationsschnittstelle 150 verfügen. Eine auf dem mobilen Gerät ablauffähige Software ist in der Lage, die Telegramminformationen aus dem künstlichen magnetischen Feld der Telegrammgeneratoren zu extrahieren und diese im Speicher 148 abzulegen und aus diesem abzurufen, sobald der mobile Speicher über die Kommunikationsschnittstelle mit einem Datenverarbeitungsgerät 152 verbunden wird.

Die Orts- und Identifikationskennungen der mobilen Geräte in den Meldungen derselben werden also empfangen, gegebenenfalls gespeichert, weiterverarbeitet und/oder verknüpft, und das Ergebnis dieser Verarbeitung wird gegebenenfalls weiteren Diensten oder mobilen Endgeräten zur Verfügung gestellt, wie z. B. dem mobilen Endgerät, das die Magnetfeldmodulation auswertete, selbst.

Als Magnetfelderzeugungsantennen sind, wie im Vorhergehenden erwähnt, Spulen mit oder ohne Kern, Helmholtz-Spulen, Ringantennen beliebiger geometrischer Ausprägung und mit einer oder mehreren Wicklungen geeignet. Wie es im Vorhergehenden erwähnt worden ist, kann ein moduliertes magnetisches Feld mit einer sehr geringen Frequenz verwendet werden, wie z.B. von weniger als 200 Hz oder zwischen 0 - 50 Hz, wobei diese niedrigen Frequenzen Vorteile bei Indoor-Anwendungen liefern können, die von der Eigenschaft herrühren, dass die Magnetfeldzonen in ihrer Ausdehnung sehr gut bestimmt werden können.

In dem Ausführungsbeispiel von Fig. 2 wurde bereits darauf hingewiesen, dass die Antennen der Informationssignalgeneratoren im Gebäude selbst integriert sein können. Ganz allgemein können Antennen der Informationssignalgeneratoren in festen oder mobilen Gegenständen angebracht bzw. angeordnet sein, besonders aber in Decken, Böden, Wänden, Türen sowie Türrahmen, Tischen, Stühlen, Regalen, Schränken, einer anderen Möblierung, Leuchten, Fenstern, Teppichen, Fahrzeugen (motorisiert oder nicht), zu Lande, zu Wasser, in der Luft oder dem Weltraum, in Tieren oder in/am Menschen, wie z. B. in der Kleidung, oder dergleichen.

Die Telegrammgeneratoren bzw. Informationssignalgeneratoren können über eine Energieversorgung mittels Batterie, wie z.B. einer aufladbaren Batterie, Netzteilen zum Anschluss an elektrische Stromnetze, wie z. B. gemäß IEEE 802.3af und IEEE 802.3at, verfügen. Ferner können dieselben über eine IP-basierte Kommunikationsschnittstelle verfügen und über diese programmiert, konfiguriert oder abgefragt werden.

Insbesondere können oben genannte Telegrammgeneratoren, Informationssignalgeneratoren bzw. das Infrastruktursystem Bestandteil eines Bezahl-, Kassen-, Geldautomaten- oder Kundenterminalsystems sein. Ferner ist es möglich, dass dieselben Bestandteil eines Zutrittskontroll-, Zeiterfassungs-, Wegweise-, Navigations- oder Anwesenheitskontrollsystems sind. Ferner ist es möglich, dass dieselben Bestandteil eines Inventarisierungs-, Nutzungserfassungs- oder Nutzungsverwaltungssystems sind. Sie können auch Bestandteil eines Gebäudeautomationssystems oder Bestandteil eines Kommunikationsverschlüsselungssystems sein. Sie können zudem Bestandteil eines Systems zur Zweck der Werbung oder des Produktmarketings sein oder Bestandteil eines Spiels oder eines Unterhaltungssystems oder Bestandteil von Kunst.

Wie es in Fig. 7 beschrieben worden ist, kann die Kommunikationsschnittstelle 150 gemäß dem USB-Standard ausgebildet sein. Die Kommunikationsschnittstelle 150 kann aber auch gemäß IEEE 802.3a/b/g/n ausgestattet sein. Die Kommunikationsschnittstelle kann allerdings auch gemäß GSM/UMTS/LTE/WiMax ausgestattet sein, was natürlich auch für die Schnittstellen 20 gilt. Eine Kommunikation über ein Datennetz 124 mit dem Server 128 ist natürlich auch möglich. Die vorerwähnte Kommunikationsschnittstellen können natürlich auch gemäß dem Bluetooth-Standard ausgestattet sein oder gemäß IEEE 802.15.4 (ZigBee).

Die obigen Ausführungsbeispiele können hinsichtlich der Beschreibung der vorliegenden Anmeldung in der Beschreibungseinleitung der Gruppe von Systemen mit kurzer Reichweite zugeordnet werden und können aber entweder exklusiv oder in Kombination mit Systemen großer Reichweite eingesetzt werden, wie sie in der Beschreibungseinleitung der vorliegenden Anmeldung genannt worden sind.

Insbesondere ergeben sich damit für die vorliegenden Ausführungsbeispiele, die im Vorhergehenden beschrieben worden sind, folgende Bereiche einer möglichen Anwendung, nämlich Indoor-Navigation, Asset & Ressource Management, Lokalisierung& Identifizierung (Personen & Gegenstände), Übertragung von Signaturen zur Verschlüsselung von Kommunikationskanälen, Zutrittskontrolle, Zeiterfassung, Gebäudeautomation inklusive audiovisuelle Systeme, Sicherheit, nutzerspezifische Informationen und Werbung, Bezahlfunktionen, Spiele & Unterhaltung, multimediale Kunst, Kundenprogramme (loyalty-programs), statistische Analysen (Gebäude/Flächen-Nutzung).

Obwohl im Vorhergehenden spezielle Beispiele für mögliche Antennen 34, 38 bzw. 84 beschrieben worden sind, wird darauf hingewiesen, dass jegliche Antenne verwendbar ist, mit der sich ein Magnetfeld erzeugen lässt. Selbiges gilt in entsprechender Weise für die obigen Magnetfeldsensoren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Aus vorgehender Beschreibung ergab sich somit ein Infrastruktursystem für ein mobiles Gerät mit einem Informationssignalgenerator 14, der ausgebildet ist, um ein magnetisches Feld zu erzeugen, das mit einer Information moduliert ist; einer Datenschnittstelle 18 zum Empfang einer Meldung von dem mobilen Gerät über eine Hochfrequente-Elektromagnetische-Welle-Schnittstelle; und einer Verarbeitungseinheit 22, die ausgebildet ist, um die Meldung auf ein Zusammenpassen mit der Information hin zu überprüfen, wobei der Informationssignalgenerator 14 so ausgebildet ist, dass eine Modulationsfrequenz, mit der das magnetische Feld mit der Information moduliert wird, kleiner als 1 kHz ist. Dabei kann der Informationssignalgenerator 14 eine Antenne 34, 38, 84 aufweisen, die als eine Spule mit oder ohne Kern, Helmholtz-Spule oder Ringantenne ausgebildet ist. Der Informationssignalgenerator 14 kann hierbei ausgebildet sein, um einen mit der Information modulierten Strom durch die Antenne zu erzeugen. Die Hochfrequente-Elektromagnetische-Welle-Schnittstelle kann eine Funkverbindung und/oder eine optische Verbindung umfassen. Der Informationssignalgenerator kann derart angeordnet sein, dass das erzeugte magnetische Feld 36, 40 quer zum Erdmagnetfeld 32 am Ort des Informationssignalgenerators 14 verläuft.

Insbesondere beschrieben obige Ausführungsbeispiele auch ein In-House-Infrastruktursystem für ein mobiles Gerät mit einer Mehrzahl von Informationssignalgeneratoren 14, die ausgebildet ist, um ein magnetisches Feld zu erzeugen, das jeweils mit einer Modulationsfrequenz kleiner als 1 kHz mit einer Information moduliert ist, die für die Informationssignalgeneratoren 14 unterschiedlich ist. Dabei kann der Informationssignalgenerator 14 so ausgebildet sein, dass eine Modulationsfrequenz, mit der das magnetische Feld mit der Information moduliert wird, kleiner als 50 Hz ist. Jeder Informationssignalgenerator 14 kann eine Antenne (34, 38, 84) aufweisen, die als eine Spule mit oder ohne Kern, Helmholtz-Spule oder Ringantenne ausgebildet ist, die einer Wand, einer Decke, einem Boden, einer Tür, einem Türrahmen, einem Fenster, einem Teppich, einem Fahrzeug, Kleidung, einer Kasse, einem Automaten oder einem Fensterrahmen untergebracht ist.

Auch ein mobiles Gerät geht aus obigen Ausführungsbeispielen hervor, wobei selbiges einen Magnetfeldsensor 42 zum Erfassen eines Magnetfelds, einen Informationsextraktor 44 zum Extrahieren einer Information aus dem Magnetfeld, mit der das Magnetfeld mit einer Modulationsfrequenz kleiner als 1 kHz moduliert ist, und eine Datenschnittstelle 46 zum Senden einer Meldung über eine Hochfrequente- Elektromagnetische-Welle-Schnittstelle, die von der Information abhängt, umfasst. Dabei kann der Magnetfeldsensor einen Hall-Sensor oder einen XMR-Sensor umfassen. Die Datenschnittstelle 46 kann einen optischen Sender umfassen und die Hochfrequente-Elektromagnetische-Welle-Schnittstelle eine optische Verbindung sein, oder die Datenschnittstelle 46 kann einen Funksender umfassen und die Hochfrequente-Elektromagnetische-Welle-Schnittstelle eine Funkverbindung sein. Das mobile Gerät kann ein Handy, ein tragbarer Computer, ein tragbares Multimediaabspielgerät oder eine Spielkonsole sein.

Ebenfalls geht aus obigen Ausfiihrungsbeispielen ein Verfahren zur Schaffung einer Infrastruktur für ein mobiles Gerät hervor, umfassend ein Erzeugen eines magnetischen Felds, das mit einer Information mit einer Modulationsfrequenz kleiner als 1 kHz moduliert ist, ein Empfangen einer Meldung von dem mobilen Gerät über eine Hochfrequente-Elektromagnetische-Welle-Schnittstelle, und ein Überprüfen der Meldung auf ein Zusammenpassen mit der Information hin. Auch ein Verfahren zum Betreiben eines mobilen Geräts mit einem Magnetfeldsensor 42 zum Erfassen eines Magnetfelds geht aus obigen Ausführungsbeispielen hervor, umfassend ein Extrahieren einer Information aus dem Magnetfeld, mit der das Magnetfeld mit einer Modulationsfrequenz kleiner als 1 kHz moduliert ist, und ein Senden einer Meldung über eine Hochfrequente-Elektromagnetische-Welle-Schnittstelle, die von der Information abhängt. Schließlich zeigen obigen Ausführungsbeispiele auch ein Verfahren zum Betreiben eines mobilen Geräts mit einem Magnetfeldsensor 42 zum Erfassen eines Magnetfelds, mit einem Extrahieren einer Orts- und/oder Identifikationsinformation aus dem Magnetfeld, mit der das Magnetfeld mit einer Modulationsfrequenz kleiner als 1 kHz moduliert ist, und einem Bestimmen einer Position des mobilen Gerätes anhand der Orts- und/oder Identifikationsinformation. Dabei kann Computerprogramm mit einem Programmcode zur Durchführung eines dieser Verfahren, wenn das Programm auf einem Computer abläuft, versehen sein.

## Patentansprüche

1. Infrastruktursystem für ein mobiles Gerät mit
einem Informationssignalgenerator (14), der ausgebildet ist, um ein magnetisches Feld zu erzeugen, das mit einer Information moduliert ist;
einer Datenschnittstelle (18) zum Empfang einer Meldung von dem mobilen Gerät über eine Hochfrequente-Elektromagnetische-Welle-Schnittstelle; und
eine Verarbeitungseinheit (22), die ausgebildet ist, um die Meldung auf ein Zusammenpassen mit der Information hin zu überprüfen,
**dadurch gekennzeichnet, dass**
der Informationssignalgenerator (14) so ausgebildet ist, dass eine Modulationsfrequenz, mit der das magnetische Feld mit der Information moduliert wird, kleiner als 1 kHz ist, und, dass das magnetische Feld mit der Information unipolar oder bipolar moduliert wird.

2. Infrastruktursystem gemäß Anspruch 1, bei dem die Antenne in Mobiliar, einer Wand, einer Decke, einem Boden, einer Tür, einem Türrahmen, einer Leuchte, einem Fenster, einem Teppich, einem Fahrzeug, Kleidung, einer Kasse, einem Automaten oder einem Fensterrahmen untergebracht ist.

3. Infrastruktursystem gemäß Anspruch 1 oder 2, bei dem der Informationssignalgenerator (14) so ausgebildet ist, dass eine Modulationsfrequenz, mit der das magnetische Feld mit der Information moduliert wird, kleiner als 50 Hz ist.

4. Infrastruktursystem gemäß einem der vorhergehenden Ansprüche, bei dem die Verarbeitungseinheit mit dem Informationssignalgenerator (14) kommunikativ gekoppelt und ausgebildet ist, um den Informationssignalgenerator (14) zu konfigurieren, um die Information, mit der der Informationssignalgenerator (14) das magnetische Feld moduliert, einzustellen.

5. Infrastruktursystem gemäß einem der vorhergehenden Ansprüche, bei dem das Infrastruktursystem eine Mehrzahl von Informationssignalgeneratoren (14, 16) aufweist, deren Informationen zueinander unterschiedliche Ort- und/oder ID-Informationen aufweisen, und die Verarbeitungseinheit ausgebildet ist, um anhand der Meldung in einer Datenbank einen Eintrag aus einer Mehrzahl von Einträgen der Datenbank zu indexieren, wobei die Mehrzahl von Einträgen jeweils einem der Mehrzahl von Informationssignalgeneratoren (14, 16) zugeordnet ist.

6. Infrastruktursystem gemäß Anspruch 5, bei dem die Verarbeitungseinheit (22) ausgebildet ist, um anhand des Index eine Ortung des mobilen Gerätes (12) durchzuführen.

7. Infrastruktursystem gemäß Anspruch 5 oder 6, bei dem die Verarbeitungseinheit (22) ausgebildet ist, um aus der Meldung eine ID des mobilen Gerätes zu extrahieren, und den Informationssignalgenerator (14) anzuweisen, das magnetische Feld mit einer Nachricht zu modulieren, die für das mobile Gerät (12) bestimmt ist.

8. Mobiles Gerät mit
einem Magnetfeldsensor (42) zum Erfassen eines Magnetfelds;
einem Informationsextraktor (44) zum Extrahieren einer Information aus dem Magnetfeld, mit der das Magnetfeld mit einer Modulationsfrequenz kleiner als 1 kHz unipolar oder bipolar moduliert ist; und
eine Datenschnittstelle (46) zum Senden einer Meldung über eine Hochfrequente-Elektromagnetische-Welle-Schnittstelle, die von der Information abhängt.

9. Mobiles Gerät gemäß Anspruch 8, bei dem der Informationsextraktor (44) ausgebildet ist, um in einem Erfassungsmodus zyklisch eine Überlagerung des Erdmagnetfeldes mit einem künstlichen Magnetfeld zu erkennen, und nach Erkennen der Überlagerung des Erdmagnetfeldes mit dem künstlichen Magnetfeld die Information, mit der das magnetische Feld moduliert ist, zu extrahieren.

10. Mobiles Gerät gemäß Anspruch 8 oder 9, bei dem der Informationsextraktor (44) ausgebildet ist, um in einem Erfassungsmodus zyklisch eine Überlagerung des Erdmagnetfeldes mit einem künstlichen Magnetfeld zu erkennen, und bei Erkennen der Überlagerung des Erdmagnetfeldes mit dem künstlichen Magnetfeld in einen Scanmodus zu wechseln, und sich in dem Scanmodus auf eine Präambel einzusynchronisieren, mit der das künstliche Magnetfeld moduliert ist, und nachfolgend die Information, mit der das magnetische Feld moduliert ist, zu extrahieren.

11. Mobiles Gerät gemäß einem der Ansprüche 8 bis 10, bei dem die Datenschnittstelle (46) ausgebildet ist, so dass die Meldung die Information enthält, mit der das Magnetfeld moduliert ist, und eine ID des mobilen Geräts.

12. Mobiles Gerät gemäß einem der Ansprüche 8 bis 11, bei dem die Datenschnittstelle (46) eine aktivierbare Verbindung nutzt und ausgebildet ist, um die Informationen, mit denen das Magnetfeld moduliert ist, zwischenzuspeichern, während die Verbindung nicht aktiviert ist.

13. Mobiles Gerät mit
einem Magnetfeldsensor (42) zum Erfassen eines Magnetfelds;
einem Informationsextraktor (44) zum Extrahieren einer Orts- und/oder Identifikationsinformation aus dem Magnetfeld, mit der das Magnetfeld mit einer Modulationsfrequenz kleiner als 1 kHz unipolar oder bipolar moduliert ist; und
einem Lokalisierer (62) zum Bestimmen einer Position des mobilen Gerätes anhand der Orts- und/oder Identifikationsinformation.

14. System aus einem Infrastruktursystem gemäß einem der Ansprüche 1 bis 7 und einem mobilen Gerät gemäß einem der Ansprüche 8 bis 12.

15. System mit
einem In-House-Infrastruktursystem mit einer Mehrzahl von Informationssignalgeneratoren (14), die ausgebildet ist, um ein magnetisches Feld zu erzeugen, das jeweils mit einer Modulationsfrequenz kleiner als 1 kHz mit einer Information unipolar oder bipolar moduliert ist, die für die Informationssignalgeneratoren (14) unterschiedlich ist; und
einem mobilen Gerät gemäß Anspruch 13.

## Claims

1. An infrastructure system for a mobile device, comprising
an information signal generator (14) implemented to generate a magnetic field modulated with information;
a data interface (18) for receiving a message from the mobile device via a high-frequency electromagnetic wave interface; and
a processing unit (22) implemented to check the message for a match with the information,
**characterized in that** the information signal generator (14) is implemented such that a modulation frequency at which the magnetic field is modulated with the information is lower than 1 kHz and that the magnetic field is modulated with the information in a unipolar or bipolar manner.

2. The infrastructure system according to claim 1, wherein the antenna is accommodated in furniture, a wall, a ceiling, a floor, a door, a door frame, a lamp, a window, a carpet, a vehicle, clothing, a cash register, a machine or a window frame.

3. The infrastructure system according to claim 1 or 2, wherein the information signal generator (14) is implemented such that a modulation frequency at which the magnetic field is modulated with the information is lower than 50 Hz.

4. The infrastructure system according to any of the preceding claims, wherein the processing unit is communicatively coupled to the information signal generator (14) and is implemented to configure the information signal generator (14) to adjust the information with which the information signal generator (14) modulates the magnetic field.

5. The infrastructure system according to any of the preceding claims, wherein the infrastructure system comprises a plurality of information signal generators (14, 16), the information of which comprises mutually different location and/or ID information, and wherein the processing unit is implemented to index, by means of the message, an entry in a database from a plurality of entries of the database, the plurality of entries each being associated with one of the plurality of information signal generators (14, 16).

6. The infrastructure system according to claim 5, wherein the processing unit (22) is implemented to perform localization of the mobile device (12) by means of the index.

7. The infrastructure system according to claim 5 or 6, wherein the processing unit (22) is implemented to extract an ID of the mobile device from the message and to instruct the information signal generator (14) to modulate the magnetic field with a message intended for the mobile device (12).

8. A mobile device comprising
a magnetic field sensor (42) for detecting a magnetic field;
an information extractor (44) for extracting from the magnetic field information with which the magnetic field is modulated in a unipolar or bipolar manner at a modulation frequency lower than 1 kHz; and
a data interface (46) for transmitting, via a high-frequency electromagnetic wave interface, a message which depends on the information.

9. The mobile device according to claim 8, wherein the information extractor (44) is implemented to cyclically detect, in a detection mode, a superposition of the earth's magnetic field with an artificial magnetic field, and to extract, upon detection of the superposition of the earth's magnetic field with the artificial magnetic field, that information with which the magnetic field is modulated.

10. The mobile device according to claim 8 or 9, wherein the information extractor (44) implemented to cyclically detect, in a detection mode, a superposition of the earth's magnetic field with an artificial magnetic field, and, upon detection of the superposition of the earth's magnetic field with the artificial magnetic field, to switch to a scanning mode and to synchronize itself, during the scanning mode, to a preamble with which the artificial magnetic field is modulated, and to subsequently extract the information with which the magnetic field is modulated.

11. The mobile device according to any of claims 8 to 10, wherein the data interface (46) is implemented such that the message contains the information with which the magnetic field is modulated and an ID of the mobile device.

12. The mobile device according to any of claims 8 to 11, wherein the data interface (46) uses an activatable link and is implemented to temporarily store the information with which the magnetic field is modulated while the link is not activated.

13. A mobile device comprising
a magnetic field sensor (42) for detecting a magnetic field;
an information extractor (44) for extracting from the magnetic field location and/or identification information with which the magnetic field is modulated in a unipolar or bipolar manner at a modulation frequency lower than 1 kHz; and
a localizer (62) for determining a position of the mobile device by means of the location and/or identification information.

14. A system of an infrastructure system according to any of claims 1 to 7 and of a mobile device according to any of claims 8 to 12.

15. A system comprising
an in-house infrastructure system comprising a plurality of information signal generators (14) implemented to generate a magnetic field which is modulated in each case in a unipolar or bipolar manner at a modulation frequency of less than 1 kHz with information which is different for the information signal generators (14); and
a mobile device according to claim 13.

## Revendications

1. Système d'infrastructure pour un dispositif mobile avec
un générateur de signal d'information (14) qui est conçu pour générer un champ magnétique qui est modulé à l'aide d'une information;
une interface de données (18) destinée à recevoir un message du dispositif mobile via une interface à ondes électromagnétiques de hautes fréquences; et
une unité de traitement (22) qui est conçue pour vérifier le message en ce qui concerne une coïncidence avec l'information,
**caractérisé par le fait que** le générateur de signal d'information (14) est conçu de sorte qu'une fréquence de modulation à laquelle le champ magnétique est modulé à l'aide de l'information soit inférieure à 1 kHz, et que le champ magnétique soit modulé de manière unipolaire ou bipolaire à l'aide de l'information.

2. Système d'infrastructure selon la revendication 1, dans lequel l'antenne est installée dans un meuble, un mur, un plafond, un plancher, une porte, un dormant de porte, une lampe, une fenêtre, un tapis, un véhicule, un vêtement, une caisse, un distributeur automatique ou un dormant de fenêtre.

3. Système d'infrastructure selon la revendication 1 ou 2, dans lequel le générateur de signal d'information (14) est conçu de sorte qu'une fréquence de modulation à laquelle le champ magnétique est modulé à l'aide de l'information soit inférieure à 50 Hz.

4. Système d'infrastructure selon l'une des revendications précédentes, dans lequel l'unité de traitement est couplée en communication au générateur de signal d'information (14) et est conçue pour configurer le générateur de signal d'information (14) pour régler l'information à l'aide de laquelle le générateur de signal d'information (14) module le champ magnétique.

5. Système d'infrastructure selon l'une des revendications précédentes, dans lequel le système d'infrastructure présente une pluralité de générateurs de signal d'information (14, 16) dont les informations présentent des informations de localisation et/ou d'identification différentes entre elles, et l'unité de traitement est conçue pour indexer, à l'aide du message dans un banc de données, une entrée parmi une pluralité d'entrées du banc de données, la pluralité d'entrées étant associées, chacune, à l'un de la pluralité de générateurs de signal d'information (14, 16).

6. Système d'infrastructure selon la revendication 5, dans lequel l'unité de traitement (22) est conçue pour réaliser, à l'aide de l'indice, une localisation du dispositif mobile (12).

7. Système d'infrastructure selon la revendication 5 ou 6, dans lequel l'unité de traitement (22) est conçue pour extraire du message une identification du dispositif mobile, et pour indiquer au générateur de signal d'information (14) de moduler le champ magnétique à l'aide d'une information qui est destinée au dispositif mobile (12).

8. Dispositif mobile avec
un capteur de champ magnétique (42) destiné à détecter un champ magnétique;
un extracteur d'information (44) destiné à extraire une information du champ magnétique à l'aide de laquelle le champ magnétique est modulé de manière unipolaire ou bipolaire à une fréquence de modulation inférieure à 1 kHz; et
une interface de données (46) destinée à envoyer un message par l'intermédiaire d'une interface à ondes électromagnétiques de hautes fréquences qui dépend de l'information.

9. Dispositif mobile selon la revendication 8, dans lequel l'extracteur d'information (44) est conçu pour détecter cycliquement, dans un mode de détection, une superposition du champ magnétique terrestre avec un champ magnétique artificiel, et pour extraire, après détection de la superposition du champ magnétique terrestre avec le champ magnétique artificiel, l'information à l'aide de laquelle est modulé le champ magnétique.

10. Dispositif mobile selon la revendication 8 ou 9, dans lequel l'extracteur d'information (44) est conçu pour détecter cycliquement, dans un mode de détection, une superposition du champ magnétique terrestre avec un champ magnétique artificiel, et pour commuter, à la détection de la superposition du champ magnétique terrestre avec le champ magnétique artificiel, à un mode de balayage et se synchroniser, dans le mode de balayage, avec un préambule à l'aide duquel est modulé le champ magnétique artificiel et pour extraire ensuite l'information à l'aide de laquelle est modulé le champ magnétique.

11. Dispositif mobile selon l'une des revendications 8 à 10, dans lequel l'interface de données (46) est conçue de sorte que le message contienne l'information à l'aide de laquelle est modulé le champ magnétique et une identification du dispositif mobile.

12. Dispositif mobile selon l'une des revendications 8 à 11, dans lequel l'interface de données (46) utilise une connexion activable et est conçue pour mémoriser temporairement l'information à l'aide de laquelle est modulé le champ magnétique tandis que la connexion n'est pas activée.

13. Dispositif mobile avec
un capteur de champ magnétique (42) destiné à détecter un champ magnétique;
un extracteur d'information (44) destiné à extraire une information de localisation et/ou d'identification du champ magnétique à l'aide de laquelle le champ magnétique est modulé de manière unipolaire ou bipolaire à une fréquence de modulation inférieure à 1 kHz; et
un localisateur (62) destiné à déterminer une position du dispositif mobile à l'aide de l'information de localisation et/ou d'identification.

14. Système composé d'un système d'infrastructure selon l'une des revendications 1 à 7 et d'un dispositif mobile selon l'une des revendications 8 à 12.

15. Système avec
un système d'infrastructure domestique avec une pluralité de générateurs de signal d'information (14), qui est conçu pour générer un champ magnétique qui est chaque fois modulé de manière unipolaire ou bipolaire à une fréquence de modulation inférieure à 1 kHz à l'aide d'une information qui est différente pour les générateurs de signal d'information (14); et
un dispositif mobile selon la revendication 13.
